(19) Europäisches Patentamt
European Patent Office
Office européen des brevets

(11) Veröffentlichungsnummer: **0 014 450**
**B1**

(12) # EUROPÄISCHE PATENTSCHRIFT

(45) Veröffentlichungstag der Patentschrift: **21.11.84**

(51) Int. Cl.³: **C 08 F 246/00,** C 08 F 4/40, C 08 F 2/16

(21) Anmeldenummer: **80100537.2**

(22) Anmeldetag: **04.02.80**

(54) **Verfahren zur Herstellung einer wässrigen Polymerdispersion, danach erhaltene Polymerdispersion und deren Verwendung.**

(30) Priorität: **10.02.79 DE 2905121**

(43) Veröffentlichungstag der Anmeldung: **20.08.80 Patentblatt 80/17**

(45) Bekanntmachung des Hinweises auf die Patenterteilung: **21.11.84 Patentblatt 84/47**

(84) Benannte Vertragsstaaten: **DE FR GB SE**

(56) Entgegenhaltungen:
**DE - A - 1 645 386**
**DE - A - 2 202 189**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Maier, Walter, Dr., Frankfurter Strasse 29, D-6238 Hofheim am Taunus (DE)**
Erfinder: **Plettner, Wolfram, Dr., Gerkenfelderweg 23, D-2071 Hammoor (DE)**
Erfinder: **Seip, Detlev, Dr., An den Römergärten 5, D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die Erfindung bezieht sich auf Verfahren zur Herstellung einer wäßrigen Polymerdispersion durch Polymerisieren mindestens eines Vinylmonomers, das keine Carboxyl- oder Amidgruppen aufweist, und mindestens eines Carbonsäureamids in einem wäßrigen Medium bei einem pH-Wert von 3 bis 7 in Gegenwart eines Schutzkolloids unter Verwendung eines Redox-Initiator-Systems sowie die danach erhaltene Polymerdispersion und deren Verwendung.

Es ist bereits bekannt, daß Polymerdispersionen durch Polymerisieren von Vinylestern und Ethylen in einem wäßrigen Medium, das Emulgatoren und/oder Schutzkolloide enthält, mit Hilfe eines Redox-Initiator-Systems herstellbar sind (vgl. deutsche Auslegeschrift 1 267 429 = britische Patentschrift 1 112 863). Dabei kann die eine Komponente des Initiator-Systems vorgelegt werden und die andere Komponente zusammen mit dem Vinylester kontinuierlich zugegeben werden. Als Reaktionstemperatur wird der Bereich von 20 bis 45° C empfohlen. Die so erhaltenen Dispersionen sind feinteilig und eignen sich als Anstrichmittel: aus diesen Dispersionen hergestellte Filme sind jedoch nicht redispergierbar.

Ferner ist bekannt, emulgatorfreie Polymerdispersionen durch Polymerisieren von Vinylestern, Ethylen und einem Acrylamid in wäßrigem Medium mittels eines Redox-Initiator-Systems herzustellen, das aus einem organischen Peroxid oder Hydroperoxid und einem wasserlöslichen Reduktionsmittel besteht (vgl. deutsche Offenlegungsschrift 2 202 189 = US-Patentschrift 3 870 673). Dabei kann ein Teil der Monomeren und ein Teil des Oxidationsmittels des Initiator-Systems im Gemisch mit Wasser vorgelegt werden. Die Polymerisation wird bei einer Temperatur von 40 bis 100° C und in einem pH-Bereich von 3 bis 7 durchgeführt. Die Polymerisation ist jedoch nur in kleinem Maßstab ohne Schwierigkeiten durchführbar, da bei größeren Ansätzen die Temperaturführung kaum zu kontrollieren ist. Man erhält feinteilige und niedrigviskose, zur Stippenbildung neigende Polymerdispersionen mit hohem Polymergehalt und einer minimalen Filmbilde-Temperatur von 0 bis 5° C, die als Pigmentbindemittel und zur Herstellung von Klebstoffen verwendet werden.

Weiterhin ist bekannt, daß sich aus emulgatorfreien Polymerdispersionen auf der Grundlage von Vinylester/Acrylester/Acrylamid-Copolymeren durch Trocknung Pulver herstellen lassen, die durch Redispergieren in Wasser stabile Dispersionen ergeben (vgl. deutsche Offenlegungsschrift 2 222 033 = US-Patentschrift 3 950 302). Diese Dispersionspulver eignen sich vor allem zur Herstellung von Klebstoffbeschichtungen, die durch Redispergieren in Wasser leicht entfernbar sind.

Aufgabe der Erfindung ist nun die problemfreie Herstellung einer wäßrigen, stabilen Polymerdispersion auf der Basis eines Copolymers mit Säureamidgruppen, die sich zum Herstellen von redispergierbaren Filmen und Pulvern eignet.

Die Erfindung betrifft ein Verfahren zur Herstellung einer wäßrigen, stabilen Polymerdispersion durch Polymerisieren mindestens eines Vinylmonomers, das frei von Carboxyl- und Amidgruppen ist, und mindestens eines Carbonsäureamids der Formel (I)

$$R^1-CH=\underset{\displaystyle R^2}{\underset{|}{C}}-CO-NH-R \qquad (I)$$

in der R ein Wasserstoffatom oder einen Methylolrest, $R^1$ ein Wasserstoffatom oder einen Alkylrest mit 1, 2 oder 3 Kohlenstoffatomen und $R^3$ ein Wasserstoffatom oder einen Methylrest bedeuten, gegebenenfalls zusammen mit einer copolymerisierbaren, ungesättigten Carbonsäure, in einem wäßrigen Medium bei einem pH-Wert von 3 bis 7 in Gegenwart eines Schutzkolloids unter Verwendung eines Redox-Initiator-Systems, dadurch gekennzeichnet, daß zunächst bei einer Temperatur von 10 bis 30° C ein homogenes Gemisch aus Wasser, Schutzkolloid und einer Teilmenge der Reduktionskomponente des Initiator-Systems hergestellt wird, dann die Temperatur des Gemisches auf 40 bis 100° C erhöht wird, wobei die Temperaturerhöhung mindestens 30° C beträgt, und die Monomeren, die Restmenge der Reduktionskomponente und die Gesamtmenge der Oxidationskomponente des Initiator-Systems dem genannten Gemisch zudosiert werden und die Polymerisation unter Einhaltung einer Temperatur von 40 bis 100° C zu Ende geführt wird.

Die Erfindung betrifft ferner die nach dem vorgenannten Verfahren erhaltene Dispersion sowie deren Verwendung als Ausgangsmaterial zur Herstellung eines redispergierbaren Pulvers oder Films.

Ein wesentliches Merkmal des erfindungsgemäßen Verfahrens ist die Maßnahme, Wasser, Schutzkolloid und eine Teilmenge der Reduktionskomponente des Initiator-Systems vorzulegen.

Die vorzulegende Teilmenge der Reduktionskomponente beträgt im allgemeinen 5 bis 40 Gewichtsprozent, vorzugsweise 10 bis 25 Gewichtsprozent der Gesamtmenge. Die einzelnen Bestandteile des Vorlagegemisches werden bei einer Temperatur von 10 bis 30° C, vorzugsweise von 15 bis 25° C, homogen miteinander vermischt.

Anschließend wird das Vorlagegemisch auf die Reaktionstemperatur erwärmt, die 40 bis 100° C, vorzugsweise 45 bis 90° C beträgt und mindestens 30° C über der vorgenannten Mischungstemperatur liegt, und die jeweiligen Monomeren, die Restmenge der Reduktionskomponente des Initiator-Systems und die Gesamtmenge der Oxidationskomponente des Initiator-Systems werden gleichmäßig zu der Vorlage gegeben. Die Polymerisation wird in einem pH-Bereich von 3 bis 7, vorzugsweise 3,5 bis 4,5, durchgeführt. Zur Einhaltung des gewünschten pH-Wertes während der Reaktion ist es zweckmäßig, ein Puffersalz zu verwenden, z. B. Borax, Natriumacetat oder Natriumpolyphosphat.

Bei einer bevorzugten Ausführungsform des erfindungsgemäßen Verfahrens wird eine Teilmenge der Monomeren bereits während der Temperaturerhöhung der Vorlage zugefügt; diese Teilmenge liegt jeweils im Bereich von 5 bis 30 Gewichtsprozent, vorzugsweise 10 bis 25 Gewichtsprozent, der Gesamtmenge des jeweiligen Monomers. Ferner ist es vorteilhaft, die Polymerisation unter einer Schutzgasatmosphäre durchzuführen: als Schutzgas ist ein inertes Gas wie Stickstoff oder ein Edelgas geeignet. Die Zugabe der Monomeren erfolgt getrennt oder vorzugsweise im Gemisch miteinander. Die Oxidationskomponente des Initiator-Systems wird vorzugsweise im Monomerengemisch gelöst zudosiert.

Als Redox-Initiator-System werden bekannte Kombinationen aus einer Reduktionskomponente und einer Oxidationskomponente eingesetzt. Als Reduktionskomponente werden Reduktone (Endiole) verwendet und vor allem wasserlösliche Salze, insbesondere Alkalisalze und Erdalkalisalze, von reduzierend wirkenden schwefelhaltigen Säuren: vorzugsweise eignen sich Sulfite, Bisulfite, Pyrosulfite, Dithionite, Thiosulfate und Formaldehydsulfoxylate. Als Oxidationskomponente werden in organischen Lösemitteln lösliche organische Peroxyverbindungen eingesetzt, vor allem Dialkylperoxide, Diacylperoxide und Alkylhydroperoxide, z. B. Di-t-butylperoxid, Diacetylperoxid, Dilauroylperoxid, Dibenzoylperoxid und t-Butylhydroperoxid. Jede Komponente des Initiator-Systems wird in einer Menge von 0,1 bis 2 Gewichtsprozent, vorzugsweise 0,2 bis 1 Gewichtsprozent eingesetzt (bezogen auf die Gesamtmenge der Monomeren).

Das erfindungsgemäße Verfahren wird in Gegenwart eines üblichen Schutzkolloids durchgeführt, das Bestandteil der Vorlage ist. Als Schutzkolloide eignen sich beispielsweise Poly(vinylpyrrolidon), Poly(N-vinylacetamid), Poly(vinylalkohol), Copolymere des N-Vinyl-N-methylacetamids mit Acrylsäureestern oder mit Maleinsäureestern sowie Cellulosederivate, insbesondere Hydroxyethylcellulose und Natrium-Carboxymethylcellulose. Gemische verschiedener Schutzkolloide sind oft bevorzugt. Die Menge des Schutzkolloids oder des Schutzkolloidgemisches beträgt im allgemeinen 0,5 bis 4 Gewichtsprozent, vorzugsweise 0,6 bis 2 Gewichtsprozent (bezogen auf die Gesamtmenge der Monomeren).

Unter Vinylmonomer wird eine polymerisierbare monomere Verbindung mit einer $H_2C=CH$-Gruppe verstanden, die von Carboxyl- und Amidgruppen frei ist. Besonders geeignet sind Verbindungen der Formel (II)

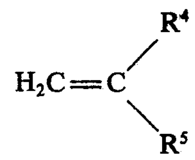

(II)

in der $R^4$ (a) ein Wasserstoffatom oder einen Alkylrest mit 1, 2 oder 3 Kohlenstoffatomen, (b) einen homo- oder heterocyclischen Rest mit 5 oder 6 Ringgliedern, (c) einen Alkoxyrest mit 1, 2, 3 oder 4 Kohlenstoffatomen, (d) einen Alkylcarboxyrest mit 2 bis 18, vorzugsweise 2 bis 10 Kohlenstoffatomen, (e) eine Nitrilgruppe, (f) ein Halogenatom oder (g) einen Alkoxycarbonylrest mit 2 bis 12, vorzugsweise 2 bis 9 Kohlenstoffatomen bedeutet und $R^5$ ein Wasserstoffatom oder ein Methylrest ist.

Geeignete Vinylmonomere sind insbesondere (a) Olefine, z. B. Ethylen, Propylen und Isobutylen, (b) Styrol, N-Vinylpyrrolidon und Vinylpyridin, (c) Vinylether, z. B. Vinylmethylether, Vinylethylether und Vinyl-n-butylether, (d) Vinylester von aliphatischen Carbonsäuren, z. B. Vinylacetat, Vinylpropionat, Vinylbutyrat, Vinylpivalat, Vinylisononat, Vinyllaurat und Vinyldecanate, (e) Acrylnitril und Methacrylnitril, (f) Vinylhalogenide, z. B. Vinylchlorid und Propenylchlorid und (g) Acrylsäureester oder Methacrylsäureester von einwertigen Alkanolen, z. B. Methylacrylat, Ethylacrylat, Butylacrylat, 2-Ethylhexylacrylat, Methylmethacrylat, Ethylmethacrylat, Butylmethacrylat, Hexylmethacrylat, Octylmethacrylat und 2-Ethylhexylmethacrylat. Ebenfalls geeignete Vinylmonomere sind Maleinsäurediester und Fumarsäurediester, insbesondere von einwertigen Alkanolen mit 2 bis 10, vorzugsweise 3 bis 8 Kohlenstoffatomen, z. B. Dibutylmaleinat, Dihexylmaleinat, Dioctylmaleinat, Dibutylfumarat, Dihexylfumarat und Dioctylfumarat.

Besonders vorteilhaft ist die Verwendung eines Vinylesters als Vinylmonomer, gegebenenfalls zusammen mit einem anderen der genannten Vinylmonomeren, vorzugsweise einem Olefin oder einem (Meth-)Acrylsäureester. Die Menge des zur Copolymerisation mit einem Carbonsäureamid eingesetzten Vinylmonomers oder Vinylmonomer-Gemisches beträgt 95 bis 75 Gewichtsprozent, vorzugsweise 90 bis 85 Gewichtsprozent, der Gesamtmonomermenge. Wenn ein Vinylester mit einem weiteren Vinylmonomer eingesetzt wird, beträgt der Anteil des Vinylesters mindestens 50 Gewichtsprozent, vorzugsweise 75 bis 95 Gewichtsprozent, der Gesamtmenge der Vinylmonomeren.

Als Carbonsäureamide der Formel (I) werden beispielsweise Acrylamid, Methacrylamid und Crotonsäureamid verwendet sowie N-Methylolacrylamid, N-Methylolmethacrylamid und N-Methylolcrotonsäureamid. Die Menge des Carbonsäureamids beträgt 5 bis 20 Gewichtsprozent, vorzugsweise 7 bis 14 Gewichtsprozent, der Gesamtmonomermenge.

Als weiteres Monomer wird gegebenenfalls noch eine copolymerisierbare ungesättigte Carbonsäure eingesetzt, insbesondere eine aliphatische Monocarbonsäure mit 3 oder 4 Kohlenstoffatomen oder eine aliphatische Dicarbonsäure mit 4 oder 5 Kohlenstoffatomen.

Geeignete ungesättigte Carbonsäuren sind beispielsweise Acrylsäure, Methacrylsäure, Crotonsäure, Itaconsäure, Maleinsäure und Fumarsäure. Die Menge der Carbonsäure beträgt maximal 5 Gewichtsprozent, vorzugsweise 0,1 bis 3,0 Gewichtsprozent, der Gesamtmonomermenge.

Das erfindungsgemäße Verfahren hat den Vorteil, daß es in praktisch beliebig großem Maßstab durchführbar ist, ohne daß Schwierigkeiten bei der Wärmeabführung nach Einsetzen der Polymerisationsreaktion auftreten, wie es bei bekannten Verfahren häufig der Fall ist.

Die erfindungsgemäß erhaltenen Polymerdispersionen weisen einen Feststoffgehalt von 40 bis 70 Gewichtsprozent, vorzugsweise von 45 bis 60 Gewichtsprozent, auf. Die Viskosität der Dispersionen liegt im Bereich von 1 bis 20 Pa · s, vorzugsweise von 1,5 bis 7,0 Pa · s (gemessen nach Epprecht). Sie eignen sich als Bindemitteldispersionen in Dispersionsfarben und vorzugsweise als Ausgangsmaterial für die Herstellung von Filmen und Pulvern für Klebzwecke. Die Filme und Pulver sind in trockenem Zustand nicht klebend: das film- oder pulverbildende Polymer läßt sich aber mit Wasser redispergieren oder anfeuchten und zeigt dann gute Klebeeigenschaften. Die Pulver werden durch Trocknung, z. B. Walzentrocknung, Gefriertrocknung und vorzugsweise Sprühtrocknung, der Polymerdispersion gewonnen. Redispergierbare Klebebeschichtungen auf der Grundlage der erfindungsgemäßen Dispersionen finden insbesondere Anwendung bei Plangummierungen, Kleberollen, Leimen, Appreturen, Teppichklebern und Trägern für abwaschbare Malfarben.

Die nachstehenden Beispiele erläutern die Erfindung: der Ausdruck »%« bedeutet dabei immer »Gewichtsprozent«.

## Beispiel 1

In einem 4-Liter-Glasgefäß, das mit Rührer, Thermometer und drei Dosiereinrichtungen versehen ist, wird unter Stickstoffatmosphäre eine Lösung von 13,8 g Hydroxyethylcellulose (mittleres Molekulargewicht $\bar{M}_n$: 190 000; Viskosität der 2gewichtsprozentigen wäßrigen Lösung, gemessen nach Höppler: 4 Pa · s) in 760 g Wasser vorgelegt. Zu dieser Vorlage werden 20% einer Lösung von 10,7 g Natriumpyrolsulfit und 6,0 g Natriumpyrophosphat in 200 g Wasser gegeben. Das erhaltene Gemisch wird 10 min lang bei Raumtemperatur gerührt und dann auf eine Temperatur von 45°C erwärmt. Nach Zugabe einer Lösung von 1,55 g t-Butylhydroperoxid in 133 g Vinylacetat wird die Temperatur des Gemisches auf 70°C erhöht. Dann werden dem Gemisch unter Rühren und unter Beibehalten der Temperatur von 70°C im Laufe von 8 h getrennt voneinander eine Lösung von 6,2 g t-Butylhydroperoxid in 1131 g Vinylacetat, eine Lösung von 180 g Acrylamid in 200 g Wasser sowie die restlichen 80% der oben erwähnten Reduktionsmittel-Lösung gleichmäßig zugeführt. Die erhaltene Dispersion wird dann noch 1 h lang bei einer Temperatur von 80°C gerührt und schließlich auf Raumtemperatur abgekühlt.

Die resultierende Dispersion ist stippenfrei und koagulatfrei; ihr Feststoffgehalt beträgt 56% und ihre Viskosität 5 Pa · s. Aus der Dispersion wird ein Film hergestellt mit einer Dicke von 200 µm (naß). Nach 24stündiger Trocknung des Films bei einer Temperatur von 23°C und einer relativen Luftfeuchtigkeit von 50% wird das getrocknete Polymer innerhalb von 90 s durch drucklos fließendes Wasser vollständig redispergiert.

## Beispiel 2

Beispiel 1 wird wiederholt, jedoch besteht die Vorlage aus einer Lösung von 13,8 g Hydroxyethylcellulose (mittleres Molekulargewicht $\bar{M}_n$: 190 000; Viskosität der 2gewichtsprozentigen wäßrigen Lösung, gemessen nach Höppler: 4 Pa · s) und 0,8 g Poly(vinylpyrrolidon) (mittleres Molekulargewicht $\bar{M}_n$: 700 000; K-Wert: 92) in 760 g Wasser.

Die resultierende Dispersion ist stippenfrei und koagulatfrei; ihr Feststoffgehalt beträgt 55% und ihre Viskosität 8 Pa · s. Das getrocknete Polymer wird innerhalb von 70 s vollständig redispergiert.

## Beispiel 3

In einem 30-Liter-Autoklav, der mit Heiz- und Kühlmantel, Rührer, Thermometer und drei Dosiereinrichtungen versehen ist, wird unter Stickstoffatmosphäre eine Lösung von 20 g der in Beispiel 1 verwendeten Hydroxyethylcellulose in 800 g Wasser vorgelegt. Zu dieser Vorlage wird eine Lösung von 8 g Natriumpyrosulfit und 8 g Borax in 400 g Wasser gegeben. Das erhaltene Gemisch wird 10 min lang bei Raumtemperatur gerührt und dann stetig erwärmt. Bei Erreichen einer Innentemperatur von 40°C wird eine Lösung von 16 g Cumolhydroperoxid in 600 g Vinylacetat dem Gemisch zugefügt, und gleichzeitig wird Ethylen bis zu einem Druck von 50 bar in den Autoklav gedrückt. Sobald die Reaktionstemperatur von 70°C erreicht ist, werden dem Gemisch unter Rühren im Laufe von 8 h getrennt voneinander eine Lösung von 63 g Cumolhydroperoxid in 6930 g Vinylacetat, eine Lösung von 500 g Acrylamid in 1500 g Wasser sowie eine Lösung von 40 g Borax und 40 g Natriumpyrosulfit in 2000 g Wasser gleichmäßig zugeführt. Während dieser Zeit werden die Reaktionstemperatur von 70°C und der Ethylendruck von 50 bar konstant gehalten. Die erhaltene Dispersion wird dann noch 1 h lang bei einer Temperatur von 80°C gerührt und schließlich auf Raumtemperatur abgekühlt.

Die resultierende Dispersion ist stippenfrei und koagulatfrei; ihr Feststoffgehalt beträgt 56% und ihre Viskosität 3 Pa · s. Entsprechend Beispiel 1 wird aus der Dispersion ein Film hergestellt und getrocknet. Das getrocknete Polymer wird innerhalb von 70 s vollständig redispergiert.

Beispiel 4

Beispiel 1 wird wiederholt, jedoch wird statt des Vinylacetats jeweils ein Gemisch aus Vinylacetat und n-Butylacrylat (Gewichtsverhältnis: 95 : 5) eingesetzt.

Die resultierende Dispersion ist stippenfrei und koagulatfrei; ihr Feststoffgehalt beträgt 55% und ihre Viskosität 4 Pa · s. Das getrocknete Polymer wird innerhalb von 80 s vollständig redispergiert.

Beispiel 5

Beispiel 1 wird wiederholt, jedoch wird statt des Vinylacetats jeweils ein Gemisch aus Vinylacetat und einem handelsüblichen Gemisch von Vinyldecanaten (Gewichtsverhältnis 80 : 20) eingesetzt.

Die resultierende Dispersion ist stippenfrei und koagulatfrei; ihr Feststoffgehalt beträgt 55% und ihre Viskosität 2,3 Pa · s. Das getrocknete Polymer wird innerhalb von 60 s vollständig redispergiert.

Beispiel 6

Beispiel 1 wird wiederholt, jedoch wird statt des Vinylacetats jeweils ein Gemisch aus Vinylacetat und Maleinsäuredibutylester (Gewichtsverhältnis: 70 : 30) eingesetzt.

Die resultierende Dispersion ist stippenfrei und koagulatfrei; ihr Feststoffgehalt beträgt 55% und ihre Viskosität 7 Pa · s. Das getrocknete Polymer wird innerhalb von 70 s vollständig redispergiert.

**Patentansprüche**

1. Verfahren zur Herstellung einer wäßrigen, stabilen Polymerdispersion durch Polymerisieren mindestens eines Vinylmonomers, das frei von Carboxyl- und Amidgruppen ist, und mindestens eines Carbonsäureamids der Formel (I)

$$R^1—CH{=}\underset{\displaystyle R^2}{\underset{|}{C}}—CO—NH—R \qquad (I)$$

in der R ein Wasserstoffatom oder einen Methylolrest, $R^1$ ein Wasserstoffatom oder einen Alkylrest mit 1, 2 oder 3 Kohlenstoffatomen und $R^2$ ein Wasserstoffatom oder einen Methylrest bedeuten, gegebenenfalls zusammen mit einer copolymerisierbaren, ungesättigten Carbonsäure, in einem wäßrigen Medium bei einem pH-Wert von 3 bis 7 in Gegenwart eines Schutzkolloids unter Verwendung eines Redox-Initiator-Systems, wobei zunächst eine Vorlage bei einer Temperatur von 10 bis 30° C hergestellt wird und die Polymerisation dann nach einer Temperaturerhöhung von mindestens 30° C bei einer Temperatur von 40 bis 100° C durchgeführt wird, dadurch gekennzeichnet, daß zunächst bei einer Temperatur von 10 bis 30° C ein homogenes Gemisch aus Wasser, Schutzkolloid und einer Teilmenge der Reduktionskomponente des Initiator-Systems hergestellt wird, dann die Temperatur des Gemisches auf 40 bis 100° C erhöht wird, wobei die Temperaturerhöhung mindestens 30° C beträgt, und die Monomeren, die Restmenge der Reduktionskomponente und die Gesamtmenge der Oxidationskomponente des Initiator-Systems dem genannten Gemisch zudosiert werden und die Polymerisation unter Einhaltung einer Temperatur von 40 bis 100° C zu Ende geführt wird.

2. Verfahren nach Anspruch 1, dadurch gekennzeichnet, daß als Teilmenge der Reduktionskomponente des Redox-Initiator-Systems eine Menge von 5 bis 40 Gewichtsprozent der Gesamtmenge verwendet wird.

3. Verfahren nach Anspruch 1, dadurch gekennzeichnet, daß eine Teilmenge der Monomeren dem Schutzkolloid enthaltenden Gemisch bereits während der Temperaturerhöhung zugefügt wird.

4. Verfahren nach Anspruch 3, dadurch gekennzeichnet, daß als Teilmenge der Monomeren eine Menge von 5 bis 30 Gewichtsprozent der Gesamtmenge verwendet wird.

5. Polymerdispersion, erhalten nach dem Verfahren gemäß Anspruch 1.

6. Verwendung der nach dem Verfahren gemäß Anspruch 1 erhaltenen Polymerdispersion zur Herstellung von Filmen oder Pulvern für Klebzwecke.

**Claims**

1. Process for preparing an aqueous stable polymer dispersion by polymerizing at least one vinyl monomer free of carboxy and amide groups, and at least one carboxylic acid amide of formula (I)

$$R^1—CH{=}\underset{\displaystyle R^2}{\underset{|}{C}}—CO—NH—R \qquad (I)$$

wherein R is a hydrogen atom or a methylol group, $R^1$ is a hydrogen atom or an alkyl group having 1, 2 or 3 carbon atoms and $R^2$ is a hydrogen atom or a methyl group, optionally together with a copolymerizable unsaturated carboxylic acid, in an aqueous medium, at a pH of from 3 to 7, in the presence of a protective colloid and

while using a redox initiator system, an initial mixture being prepared at a temperature of from 10 to 30°C and the polymerization being carried out at a temperature of from 40 to 100°C after a temperature increase by at least 30°C, which comprises preparing a homogeneous mixture of water, a protective colloid and a partial quantity of the reduction component of the initiator system at a temperature of from 10 to 30°C, increasing the temperature of the resulting mixture to 40—100°C, the temperature increase being at least 30°C, and gradually adding to said mixture the monomers, the residual quantity of the reduction component and the total quantity of the oxidation component of the initiator system and carrying the polymerization to completion while maintaining a temperature of from 40 to 100°C.

2. The process of claim 1, which comprises using a partial quantity of the reduction component of the redox initiator system which amounts to 5 to 40% by weight of the total quantity.

3. The process of claim 1, which comprises adding a partial quantity of the monomers to the mixture containing the protective colloid already during the temperature increase.

4. The process of claim 3, which comprises using a partial quantity of the monomers which amounts to 5 to 30% by weight of the total quantity.

5. Polymer dispersion obtained by the process according to claim 1.

6. Use of the polymer dispersion obtained by the process according to claim 1 in the preparation of films or powders for adhesion purposes.

**Revendications**

1. Procédé pour préparer une dispersion aqueuse stable de polymère par polymérisation d'au moins un monomère vinylique dépourvu de radicaux carboxy et amides, et d'au moins un carboxamide répondant à la formule (I):

$$R^1-CH=\underset{\substack{|\\R^2}}{C}-CO-NH-R \qquad (I)$$

dans laquelle R représente un atome d'hydrogène ou un radical méthylol, $R^1$ représente un atome d'hydrogène ou un radical alkyle contenant 1, 2 ou 3 atomes de carbone et $R^2$ représente un atome d'hydrogène ou un radical méthyle, éventuellement avec un acide carboxylique insaturé copolymérisable, dans un milieu aqueux, à un pH de 3 à 7, en présence d'un colloïde protecteur et à l'aide d'un système amorceur rédox, procédé selon lequel on prépare d'abord un mélange initial à une température de 10 à 30°C et, après avoir élevé la température d'au moins 30°C et l'avoir ainsi portée à une valeur de 40 à 100°C, on effectue la polymérisation, ce procédé étant caractérisé en ce qu'on prépare d'abord, à une température de 10 à 30°C, un mélange homogène d'eau, d'un colloïde protecteur et d'une partie de la composante réductrice du système amorceur, puis on élève la température du mélange à une valeur de 40 à 100°C, l'élévation de température étant d'au moins 30°C, on introduit progressivement dans le mélange en question les monomères, le reste de la composante réductrice et la totalité de la composante oxydante du système amorceur, et on achève la polymérisation tout en maintenant la température entre 40 et 100°C.

2. Procédé selon la revendication 1 caractérisé en ce que la fraction de la composante réductrice du système amorceur rédox que l'on utilise représente de 5 à 40% en poids de la quantité totale.

3. Procédé selon la revendication 1 caractérisé en ce qu'on ajoute, au mélange contenant le colloïde protecteur, une fraction des monomères déjà au cours de l'élévation de la température.

4. Procédé selon la revendication 3 caractérisé en ce que la fraction des monomères que l'on ajoute représente de 5 à 30% en poids de la quantité totale.

5. Dispersion de polymère obtenue par le procédé de la revendication 1.

6. Application de la dispersion de polymère obtenue par le procédé de la revendication 1 à la fabrication de feuils ou de poudres à des fins de collage.